# EUROPÄISCHE PATENTSCHRIFT

(11) **EP 2 105 628 B1**
(45) Veröffentlichungstag und Bekanntmachung des Hinweises auf die Patenterteilung: **09.03.2011**
(21) Anmeldenummer: 09000188.4
(22) Anmeldetag: 09.01.2009
(51) Int. Cl.: F16D 65/12, F16D 66/02

(54) **Bremsscheibe, insbesondere Keramik-Bremsscheibe, für Kraftfahrzeuge, sowie Vorrichtung zur Verschleissanzeige an Bremsscheiben**
Brace disc, in particular ceramic brake disc, for motor vehicles and device for showing the wear on brake discs
Disque de frein, notamment disque de frein en céramique, pour véhicules automobiles et dispositif d'affichage de l'usure sur des disques de frein

(30) Priorität: 26.03.2008 DE 102008015602
(43) Veröffentlichungstag der Anmeldung: 30.09.2009
(73) Patentinhaber: Audi AG, 85045 Ingolstadt (DE)
(72) Erfinder: Rosenlöcher, Jens, 86161 Augsburg (DE); Waninger, Robert, 85055 Ingolstadt (DE)
(74) Vertreter: Asch, Konrad

(56) Entgegenhaltungen:
- EP-A- 1 248 009
- DE-A1- 10 116 659
- US-A- 4 604 604
- US-A1- 2002 117 360

## Beschreibung

Die Erfindung betrifft eine Bremsscheibe, insbesondere eine Keramik-Bremsscheibe und insbesondere für Kraftfahrzeuge, gemäß dem Oberbegriff des Anspruchs 1, sowie eine Vorrichtung zur Verschleißanzeige nach dem Oberbegriff des Anspruches 15.

Keramik-Bremsscheiben, z.B. aus Verbundkörpern mit Kohlenstofffasern und Siliziumkarbid, unterliegen im Betrieb ab einer Temperatur von ca. 620 K und höher einer kontinuierlichen Oxidation der im Komposite vorhandenen Kohlenstofffasern. Diese Oxidation ist nicht unbedingt durch Messung des thermomechanischen Dickenverschleißes der Bremsscheiben messbar, sondern muss vielmehr in aufwändiger Weise durch Ermittlung des Gewichtsverlustes festgestellt werden. Ab einem bestimmten Wert des Gewichtsverlustes ist die kritische Restfestigkeit der Bremsscheiben erreicht und diese müssen ausgetauscht werden. Dieser Zustand ist jedoch im Servicebereich ohne entsprechenden Montageaufwand (Ausbau der Bremsscheiben) und geeigneten Meßmitteln nicht feststellbar.

Durch die DE 101 16 659 A1 ist es bereits bekannt, an einer zugänglichen Stelle der Keramik-Bremsscheiben bzw. an deren Reibflächen einen Belastungsindikator aus einem Material einzusetzen, das bei extremen Temperatureinflüssen visuelle Hinweise über etwaige Zustandsänderungen liefert. Der Belastungsindikator, z.B. aus Graphit und farblich von den Bremsscheiben abgesetzt, soll sich bei Extrembelastungen sichtbar verändern oder ggf. ablösen bzw. auflösen und somit eine einfache, visuelle Anzeige über einen beginnenden, kritischen Zustand der Keramik-Bremsscheiben liefern.

Weiter ist aus der EP 1 248 009 A2 eine Vorrichtung zur Anzeige der Gesamtbelastung bei Bremsscheiben aus C-Faser verstärkter Keramik bekannt, bei der in der Bremsscheibe ausgehend von der Reibfläche ein Indikatorelement vorgesehen ist, dessen Oxidationsbeständigkeit gegenüber dem Werkstoff der Bremsscheibe vermindert ist. Das Indikatorelement besteht aus einem Kohlenstoff-Werkstoff und ist mit der Bremsscheibe durch eine siliziumkarbidhaltige Schicht verbunden. Konkret ist das Indikatorelement stiftförmig ausgebildet und in eine Bohrung in der Bremsscheibe eingesetzt.

Aufgabe der Erfindung ist es, eine Bremsscheibe, insbesondere eine Keramik-Bremsscheibe, insbesondere für Kraftfahrzeuge, mit einer Vorrichtung zur Verschleißanzeige zu versehen, mit der in zuverlässiger Weise sowie in einem erweiterten Umfang kritische Verschleißzustände an Bremsscheiben auf einfachste Weise insbesondere visuell ohne zusätzliche Hilfsmittel feststellbar sind.

Erfindungsgemäß wird diese Aufgabe jeweils gelöst durch die Merkmale der unabhängigen Patentansprüche 1, 15 und 16. Weitere vorteilhafte Ausgestaltungen sind Gegenstand der Unteransprüche.

Erfindungsgemäß wird vorgeschlagen, dass das Verbindungsmittel den Belastungsindikator bei Erreichen eines definierten Verschleißzustandes freigibt, so dass dieser z. B. verloren gehen kann, oder, dass alternativ das Verbindungsmittel die Verlagerung des Belastungsindikators lediglich um einen bestimmten, vorgegebenen Verlagerungsweg freigibt.

Dadurch kann in beiden Fällen auf einfache, funktionssichere und zuverlässige Weise erkannt werden, ob sich ein kritischer Verschleißzustand an der Bremsscheibe eingestellt hat, der ein Austauschen derselben erfordert. Die Detektierung des vorgegebenen Verschleißzustandes kann dabei auf vielfältige Weise erfolgen, z. B. sensorisch oder durch andere Hilfsmittel. Besonders bevorzugt ist es jedoch, den definierten Verschleißzustand anhand des Verbindungsmittels zwischen Bremsscheibe und Belastungsindikator und damit anhand der Verschleißparameter des Verbindungsmittels selbst festzulegen. Diese Verbindungsmittel-Verschleißparameter sollten wiederum bevorzugt mit den Verschleißparametern der Bremsscheibe, die ja bezüglich Verschleiß überwacht werden soll, korrelieren. Gemäß einer besonderes bevorzugten Ausgestaltung ist daher vorgesehen, das Verbindungsmittel wenigstens teilweise aus einem solchen Material herzustellen, das hinsichtlich seiner insbesondere thermischen Verschleißeigenschaften im Wesentlichen identisch mit dem Verschleißeigenschaften der zu überwachenden Bremsscheibe ist. Dies erfolgt bevorzugt dadurch, das das Verbindungsmittel durch einen geeigneten in gewissen, vorgegebenen Grenzen temperaturbeständigen Kleber, Lot, Kohlenstoffpaste oder dergleichen geeigneter Materialien gebildet ist, deren Festigkeit bei fortgesetzter Dauerbelastung bzw. ständigem Temperatureintrag und/oder bei vorgegebenen Extrembelastungen der Bremsscheibe abnimmt. Das oder die Verbindungsmittel sind dabei konstruktiv ferner so ausgelegt, dass dessen bzw. deren Festigkeit über das im Betrieb auftretende Ternperaturspektrum der abnehmenden Festigkeit der Bremsscheibe quasi vorauseilt und somit zuverlässig einen kritischen Verschleißzustand anzeigt.

Mit der erfindungsgemäßen Lehre besteht daher kein direkter Kontakt des Belastungsindikators mit der Brems- bzw. Reiboberfläche bis zum Zeitpunkt einer erforderlichen Verschleißindikation, wobei sich der Belastungsindikator nicht am Oxidationsverhalten der Reibschicht als solches orientiert, sondern am Oxidationsverhalten der festigkeitsrelevanten Struktur (Tragkörper), in das der Belastungsindikator eingebettet ist.

Weiter ist gemäß einer besonders bevorzugten Ausführungsform vorgesehen, dass der Belastungsindikator durch einen Kraftspeicher in die gewünschte Verlagerungsrichtung vorgespannt ist, was vorzugsweise mit Hilfe eines Federmittels erfolgt. Die Vorspannkraft ist hier so vorgegeben, dass der Belastungsindikator erst bei Erreichen des vorgegebenen, definierten Verschleißzustandes, bevorzugt des Verbindungsmittels zwischen Bremsscheibe und Belastungsindikator verlagert bzw. freigegeben wird.

Bevorzugt ist der Belastungsindikator durch einen in einer Aufnahme des Scheibenkörpers der Bremsscheibe aufgenommenen Stift als Verschleißpin ausgebildet. Die Abmessung, insbesondere der Durchmesser des z. B. als Stift ausgebildeten Belastungskörpers wird bevorzugt so groß gewählt, dass insbesondere in Verbindung mit der Anordnung desselben unmittelbar im Bereich der Reib- bzw. Bremsfläche ein "Befüllen" einer zugeordneten Aufnahme mit abgetragenem Belagmaterial vermieden wird. Bevorzugt liegt der Stiftdurchmesser im Bereich zwischen 6 mm bis 12 mm.

Die Aufnahme selbst kann auf unterschiedliche Weise ausgebildet sein, z. B. als Ausnehmung, in Form einer Ausbuchtung, Senkung, Sackloch, Durchgangsloch, Bohrung oder dergleichen, im Scheibenkörper. Bevorzugt ist die Aufnahme jedoch durch eine in eine solche Ausnehmung des Scheibenkörpers fest einsetzbare Führungshülse gebildet. Die Führungshülse kann im Scheibenkörper fest bzw. verliersicher durch z. B. Crimpen oder Nieten oder dergleichen befestigt werden.

Besonders bevorzugt ist der Belastungsindikator durch einen in der Aufnahme bevorzugt federnd nach außen oder innen vorgespannten, durch Verbindungsmittel fixierten Stift gebildet ist, wobei sich die Verbindung zwischen Aufnahme bzw. Führungshülse und Stift durch temperaturbedingte Extrembelastungen und/oder fortgesetzte Dauerbelastungen sukzessive löst. Mit anderen Worten erfolgt hier dann eine Alterung der Verbindung in Abhängigkeit von der thermischen Last. Die bevorzugte Führungshülse aus temperaturbeständigem Material (z. B. Gussstahl) und der federnd vorgespannte Stift aus ebenfalls temperaturbeständigem Material (z. B. einem Keramik-Verbundkörper) können prozesssicher als Montageeinheit hergestellt und formschlüssig in dem Bremsscheibenkörper befestigt werden. Bei Erreichen eines kritischen Festigkeitszustandes der Bremsscheibe löst sich dann z. B. der Stift und wird aus der Aufnahme bzw. Führungshülse "herauskatapultiert" bei nach außen gerichteter Vorspannung, wodurch eine ohne weiteres ersichtliche, visuelle Verschleißanzeige durch die freigegebene Öffnung im Bremsscheibenkörper gegeben ist. Alternativ dazu kann der z. B. Stift bei einer nach innen gerichteten Vorspannung auch in die Aufnahme bzw. Führungshülse "eingezogen" werden, was ebenfalls gut sichtbar gestaltet sein kann.

Der Stift wird bevorzugt mittels einer in die Aufnahme bzw. bevorzugt in eine Führungshülse eingesetzten Druckfeder, insbesondere einer Schraubendruckfeder nach außen oder mittels einer Zugfeder, insbesondere einer Schraubenzugfeder nach innen vorgespannt, wobei sich die Druckfeder bzw. Zugfeder am Boden der bevorzugt durch eine einseitig geschlossenen Führungshülse ausgebildeten Aufnahme abstützt und/oder am Boden befestigt ist. Die Druckfeder drückt bei Versagen der Verbindungsmittel den Stift aus der Aufnahme oder der Führungshülse heraus bzw. die Zugfeder zieht alternativ den Stift in die Aufnahme oder die Führungshülse hinein, bleibt aber bevorzugt jeweils in der Aufnahme bzw. Führungshülse stecken, um schädliche Kontakte mit den Bremsklötzen der Scheibenbremsen auszuschließen.

In weiterer Ausgestaltung der Erfindung kann bei verloren gegangenem bzw. ausgeschobenem oder eingezogenem Belastungsindikator wenigstens eine Öffnung freigegeben werden, die im Fahrbetrieb hörbare Pfeifgeräusche oder Schwingungen oder Vibrationen erzeugt. Insbesondere können in dem Boden der Aufnahme, insbesondere einer Führungshülse eine oder mehrere Öffnungen derart vorgesehen sein, dass bei herausgefallenem bzw. ausgeschobenem oder eingezogenem Stift bei drehender Bremsscheibe hörbare Pfeifgeräusche entstehen oder Schwingungen oder Vibrationen erzeugt werden, die somit als zusätzliche, akustische Anzeige auf einen ggf. kritischen Zustand der Bremsscheiben hinweisen.

In vorteilhafter Weiterbildung der Erfindung kann der wenigstens eine Belastungsindikator, also bevorzugt der Stift und/oder die Aufnahme bzw. Führungshülse, um ein eine sogenannte abrasive Verschleißgrenze der Bremsscheibe definierendes Maß von der Reibfläche bzw. Bremsfläche der Bremsscheibe zurückgesetzt sein. Damit kann der Belastungsindikator bzw. können bevorzugt der Stift und/oder die Aufnahme bzw. Führungshülse, in einer vorteilhaften Doppelfunktion zusätzlich zu der zuvor beschriebenen Belastungsanzeige auch einen mechanischen Verschleißzustand der Bremsscheibe insbesondere akustisch und/oder visuell anzeigen, der sich z. B. aus einem direkten Kontakt zwischen den Bremsklötzen der Scheibenbremse und dem Belastungsindikator bzw. bevorzugt dem Stift und/oder der Aufnahme bzw. der Führungshülse ergibt.

Alternativ oder zusätzlich dazu kann aber auch vorgesehen sein, den wenigstens einen Belastungsindikator am Außenumfang der Bremsscheibe anzuordnen, wodurch auf jeden Fall sichergestellt ist, dass dort kein den Außenumfang reduzierender Dickenverschleiß auftritt, sondern lediglich Oxidation.

Dabei können sich gemäß einer vorteilhaften Weiterbildung das sichtbare Ende des Belastungsindikators, insbesondere des Stiftes und/oder der Aufnahme bzw. der Führungshülse, auch farblich von der Bremsscheibe unterscheiden, wodurch insbesondere ein Schleifkontakt zwischen den Bremsklötzen und dem z. B. Stift und/oder der Aufnahme bzw. der Führunghülse visuell besonders gut erkennbar ist. Auch der Verlust des Belastungsindikators ist dann gut zu erkennen. Insbesondere können das sichtbare Ende des Stiftes und/oder der Aufnahme, insbesondere der Führungshülse eingefärbt sein, um sich prägnant von den in der Regel dunklen bzw. grauen Bremsscheiben abzuheben.

Schließlich können an den Bremsscheiben mehrere, bevorzugt gleichmäßig über deren Umfang verteilte Belastungsindikatoren der vorstehenden Art vorgesehen sein, die eine dementsprechend erhöhte Erkennbarkeit und Funktionssicherheit gewährleisten.

Eine bevorzugte Montageinheit wird schließlich separat mit den Merkmalen des Anspruches 15 und eine dieser zuordenbare Bremsscheibe mit den Merkmalen des Anspruches 16 beansprucht.

Ein Ausführungsbeispiel der Erfindung ist im Folgenden mit weiteren Einzelheiten näher erläutert. Die schematische Zeichnung zeigt in:
- **Fig. 1**: einen teilweisen Längsschnitt durch eine Keramik-Bremsscheibe für eine Scheibenbremse für Kraftfahrzeuge, mit einem in den Scheibenkörper eingesetzten Belastungsindikator mit einem in einer Führungshülse federnd vorgespannten Stift,
- **Fig. 2**: äußerst schematisch und beispielhaft einen als Montageinheit ausgeführten Belastungsindikator gemäß **Fig. 1** in vergrößertem Maßstab,
- **Fig. 3**: schematisch eine alternative Ausführungsform eines erfindungs- gemäßen Belastungsindikators mitsamt zugeordneter Führungs- hülse im unverschlissenen Zustand einer Bremsscheibe,
- **Fig.4**: einen Aufbau gemäß **Fig. 3****,** bei der die erfindungsgemäße Verschleißanzeige einen Gewichtsverlust (Oxidation) anzeigt,
- **Fig. 5**: einen Aufbau gemäß **Fig. 3****,** bei dem die erfindungsgemäße Ver- schleißanzeige einen Dickenverschleiß anzeigt,
- **Fig. 6**: eine alternative Ausführungsform einer erfindungsgemäßen Kera- mik-Bremsscheibe mit im stirnseitigen Außenumfangsbereich ange- ordneten Belastungsindikator, und
- **Fig.** 7: schematisch eine Seitenansicht der Ausführungsform nach **Fig. 6****.**

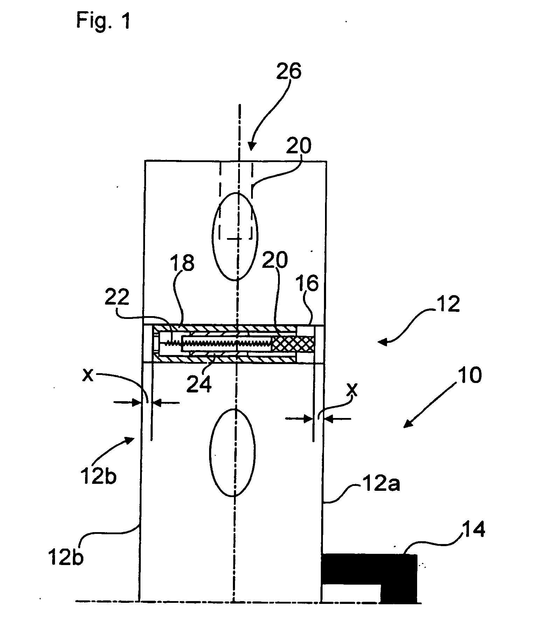

Die **Fig. 1** zeigt grob schematisch einen teilweisen Längsschnitt entlang der Drehachse einer Keramik-Bremsscheibe 10 für eine Scheibenbremse für Kraftfahrzeuge, mit einem ringförmigen Scheibenkörper 12 und einem den Scheibenkörper 12 tragenden Bremsscheibentopf 14. Soweit nicht beschrieben, kann die Bremsscheibe 10 herkömmlicher Bauart und an einer Radachse des Kraftfahrzeuges drehbar gelagert sein.

Der Scheibenkörper 12 ist aus einer kohlenstofffaserverstärkten Siliziumkarbid-Keramik in bekannter Weise hergestellt und weist beidseitig ringförmige Reibflächen 12a, 12b auf, an denen die Bremsklötze eines nicht dargestellten Bremssattels der Scheibenbremse angreifen und die Reibarbeit geleistet wird.

Z. B. sind an mehreren, gleichmäßig über den Umfang des Scheibenkörpers 12 verteilten Positionen und etwa mittig der Reibflächen 12a, 12b in den Scheibenkörper 12 Ausnehmungen 16 eingearbeitet, in die jeweils Belastungsindikatoren eingesetzt sind, die sich im Wesentlichen jeweils aus einer Führungshülse 18 und einem federnd vorgespannten Stift 20 zusammensetzen.

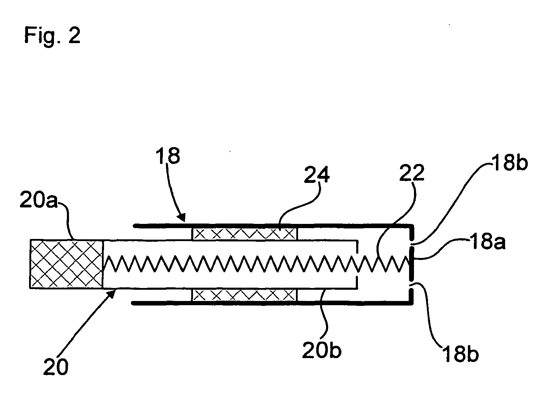

Die **Fig. 2** zeigt einen der mehreren Belastungsindikatoren im Detail. Wie ersichtlich, weist dieser eine äußere Führungshülse 18 auf, die einseitig einen angeformten Boden 18a aufweist. Die Führungshülse 18 ist z. B. als hochtemperaturbeständiges Stahlgussteil oder als Sintermetallteil hergestellt und in der Ausnehmung 16 des Scheibenkörpers 12 kraft- und/oder formschlüssig gehalten. Dies kann durch Einpressen und/oder durch Umbördeln in einer z. B. gestuft ausgeführten Ausnehmung 16 bewerkstelligt sein. Alternativ dazu kann die Führungshülse 18 aber auch aus Keramik, z. B. Borkarbid, Kupfer oder dergleichen hergestellt sein.

In die Führungshülse 18 sind eine Schraubendruckfeder 22 aus Stahl und der abschnittsweise hülsenförmig ausgeführte Stift 20 ebenfalls aus hochtemperaturbeständigem Material eingesetzt. Der Stift 20 ist z.B. aus einer Verbundkeramik, aus Graphit oder aus Sintermetall oder aus Kupfer hergestellt.

Die Schraubendruckfeder 22 stützt sich einerseits am Boden 18a der Führungshülse 18 und andererseits an dem aus Vollmaterial ausgeführten Abschnitt 20a des Stiftes 20 ab. Dabei erstreckt sich die Schraubendruckfeder 22 wie ersichtlich durch den hülsenförmigen Abschnitt 20b des Stiftes 20, wobei sie diesen mit einer definierten Vorspannkraft in Richtung nach außerhalb der Führungshülse 18 beaufschlagt. Alternativ hierzu könnte auch ein Aufbau vorgesehen sein, bei dem eine Zugfeder eingesetzt ist, der den Stift 20 mit einer definierten Vorspannkraft in Richtung in die Führungshülse 18 hinein beaufschlagt. Hierbei handelt es sich um eine zur Vorspannung nach außen äquivalente Ausführungsform, für die das nachstehend Ausgeführte im übertragenen Sinne analog gilt, ohne dass dies nochmals explizit erläutert wird.

In dem Boden 18a der Führungshülse 18 sind mehrere Öffnungen 18b vorgesehen, die konstruktiv so ausgelegt sind, dass sie bei herausgefallenem Stift 20 aufgrund der gebildeten strömungstechnischen Verbindung durch die Führungshülse 18 hindurch bei drehender Bremsscheibe 10 ein akustisch hörbares Pfeifgeräusch oder Vibrationen generieren.

Die den ringförmigen Bremsflächen 12a, 12b des Scheibenkörpers 12 benachbarten Enden bzw. Stirnflächen der Führungshülse 18 bzw. deren Bodens 18a und des Abschnittes 20a des Stiftes 20 können zur farblichen Abhebung von dem Scheibenkörper 12 z. B. rot eingefärbt sein.

Der Stift 20 ist über ein diesen mantelförmig umhüllendes Verbindungsmittel 24 aus einem z. B. hochtemperaturfesten Kleber in der Führungshülse 18 fixiert und bildet mit dieser eine Montageeinheit, die wie vorbeschrieben über die äußere Führungshülse 18 in den Scheibenkörper 12 einsetzbar ist.

Die Länge der aus Führungshülse 18 und Stift 20 gebildeten Montageeinheit ist so ausgelegt, dass die besagten, eingefärbten Stirnflächen des Stiftes 20 einerseits und des Bodens 18a andererseits im Einbauzustand (vgl. Fig. 1) um ein Maß X gegenüber den Bremsflächen 12a, 12b zurückgesetzt sind. Das Maß X entspricht dabei der konstruktiv festgelegten Verschleißgrenze für den abrasiven Verschleiß am Scheibenkörper 12 zwischen den Bremsklötzen und der Scheibe bei Bremsvorgängen.

Ist diese Verschleißgrenze erreicht, so geraten die besagten, z. B. rot eingefärbten Stirnflächen des Stiftes 20 und/oder des Bodens 18a der Führungshülse 18 mit den Bremsklötzen in Kontakt und zeigen deutlich sichtbare Schleifspuren sowie ggf. hörbare Schleifgeräusche beim Bremsvorgang. Zudem kann auch schon bei einer Annäherung der besagten Stirnflächen an die Bremsflächen 12a, 12b der Scheibenverschleiß visuell abgeschätzt werden.

Die Montageeinheit aus Führungshülse 18 und Stift 20 ist ferner so in den Scheibenkörper 12 eingesetzt, dass der Stift 20 auf der Scheibenkörper-Außenseite positioniert ist, an der auch der Bremsscheibentopf 14 liegt.

Dadurch können die Stifte 20 der mehreren in den Scheibenkörper 12 eingesetzten Montageeinheiten bzw. Belastungsindikatoren von außerhalb des Kraftfahrzeuges und bei sternförmigen Radfelgen durch diese hindurch in einfacher Weise gesehen und überprüft werden.

Der den Stift 20 einer jeden Montageeinheit haltende, hochtemperaturfeste Kleber als Verbindungsmittel 24 ist so konzipiert, dass dessen Festigkeitseigenschaften bei temperaturbedingten Extrembelastungen der Scheibenbremse 10 bzw. bei fortgesetzten Dauerbelastungen mit Temperaturen über ca. 620 K sukzessive abnimmt. Dabei sollen die Festigkeitseigenschaften denen bei Gewichtsverminderung des Scheibenkörpers 12 durch Oxidation bei hohen Temperaturen quasi "vorauseilen", derart, dass vor Erreichen einer kritischen Restfestigkeit des Scheibenkörpers 12 das Verbindungsmittel 24 bzw. der Kleber versagt und somit der Stift 20 durch die Vorspannkraft der Schraubendruckfeder 22 aus der Führungshülse 18 "herauskatapultiert" wird.

Ein somit an einer oder mehrerer der Führungshülsen 18 fehlender Stift 20 bzw. die dadurch freigegebene Öffnung bildet eine von außerhalb des Kraftfahrzeuges und ggf. durch die entsprechende Radfelge hindurch gut sichtbare Anzeige, die auf einen möglicher Weise kritischen Betriebszustand der Keramik-Bremsscheibe 10 bzw. des Scheibenkörpers 12 hinweist.

Zudem entstehen durch das Fehlen eines oder mehrerer Stifte 20 bzw. durch die Strömungsverbindung über die Öffnungen 18b im Boden 18a der Führungshülsen 18 bei drehender Bremsscheibe 10 Vibrationen oder Pfeifgeräusche, die eine zusätzliche akustische Warnung für den Fahrer eines Kraftfahrzeuges darstellen.

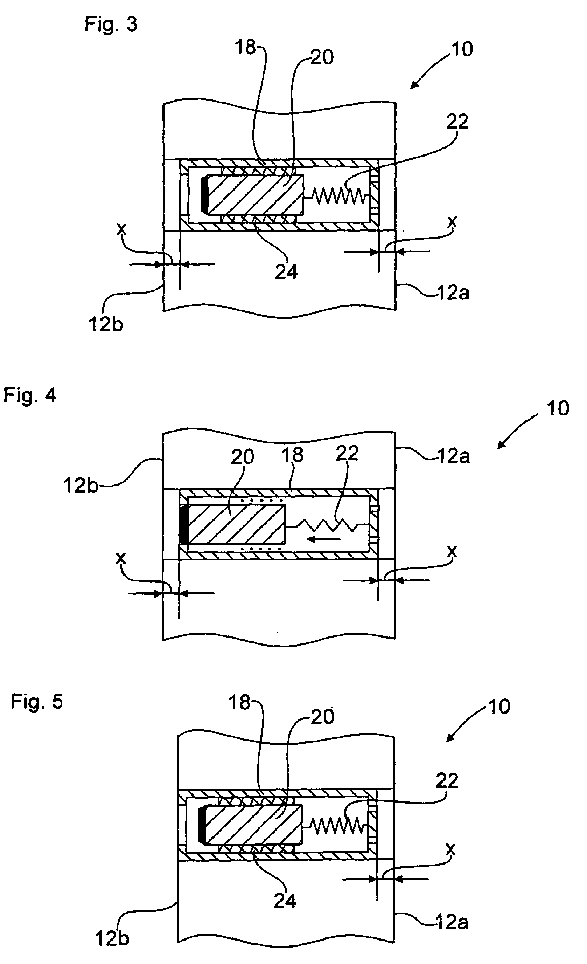

In den **Fig. 3** und **5** ist schematisch die Funktionsweise der erfindungsgemäßen Verschleißanzeige erläutert. In der Fig. 3 ist eine zur Ausgestaltung **der** **Fig. 1** und **2** alternative Ausführungsform gezeigt, bei der der ebenfalls als Stift ausgebildete Belastungsindikator wiederum in einer Führungshülse 18 aufgenommen und mittels z. B. eines in vorgegebenen Grenzen hochtemperaturbeständigen Klebers oder Lotes als Verbindungsmittel 24 festgelegt ist. Die Verbindungskraft des Verbindungsmittels 24 ist auch hier wiederum so vorgegeben, dass die auf den Stift 20 ausgeübte Haltekraft größer ist als die durch eine Schraubendruckfeder 22 in Richtung Ausschub (linke Bildseite) ausgeübte Vorspannkraft auf den Stift 20. Weiter ist in der **Fig. 3** wiederum entsprechend der Ausgestaltung nach **Fig. 1** zu beiden Enden der Führungshülse 18 ein Maß x als Verschleißgrenze definiert.

Während die **Fig. 3** den nicht verschlissenen Zustand der Bremsscheibe zeigt, ist nunmehr in der **Fig. 4** lediglich schematisch und beispielhaft derjenige Zustand gezeigt, bei dem das z. B. als Kleber ausgebildete Verbindungmittel 24 "versagt", wodurch die Schraubendruckfeder 22 den Stift 20, der an seiner Spitze z. B. rot eingefärbt ist, in der Bildebene der **Fig. 4** nach links verschiebt; im hier dargestellten Beispielfall solange, bis dieser an einem führungshülsenseitigen Öffnungsrandbereich zur Anlage gelangt. Das Verbindungsmittel 24 ist hier bezüglich seiner Stift-Haltekraft so ausgelegt, dass dieses die Verlagerung des Stiftes 20 als Belastungsindikator erst dann freigibt, wenn ein bestimmter Verschleißzustand bzw. Oxidationszustand der Bremsscheibe 10, d. h. somit mit anderen Worten ein bestimmter Gewichts- oder Masseverlust der Bremsscheibe stattgefunden hat. In der in der **Fig. 4** gezeigten Verlagerungsposition des Stiftes 20 zeigt dieser somit an, dass ein kritischer Gewichtsverlust der z. B. Keramikbremsscheibe erreicht worden ist, so dass die Bremsscheibe zwingend ausgetauscht werden muss. Wie bereits zuvor im allgemeinen Teil der Beschreibung ausführlich beschrieben, wird hier somit das Verbindungsmittel aus einem Material hergestellt, das hinsichtlich seiner Verschleißeigenschaften, insbesondere hinsichtlich seiner thermischen Verschleißeigenschaften im Wesentlichen identisch mit den Verschleißeigenschaften, insbesondere mit den thermischen Verschleißeigenschaften der Bremsscheibe ist, so dass eine funktionssichere und zuverlässige Aussage über eine stattgefundene Oxidation und damit über einer tatsächlichen Gewichtsverlust erfolgen kann.

In der **Fig. 5** ist der alternative Fall gezeigt, nämlich dass hier kein Gewichtsverlust durch Oxidation stattgefunden hat, sondern ein Dickenverschleiß der Bremsscheibe 10 erfolgt ist, in dem die Bremsscheibe 10 an der Reibfläche 12b um das Verschleißmaß x in der Dicke reduziert worden ist, so dass die z. B. rot eingefärbte Stirnseite der Führungshülse freigegeben wird bzw. im Kontakt mit den Bremsklötzen deutlich sichtbare Schleifspuren hinterlässt und dadurch eine Austauschnotwendigkeit visuell anzeigt.

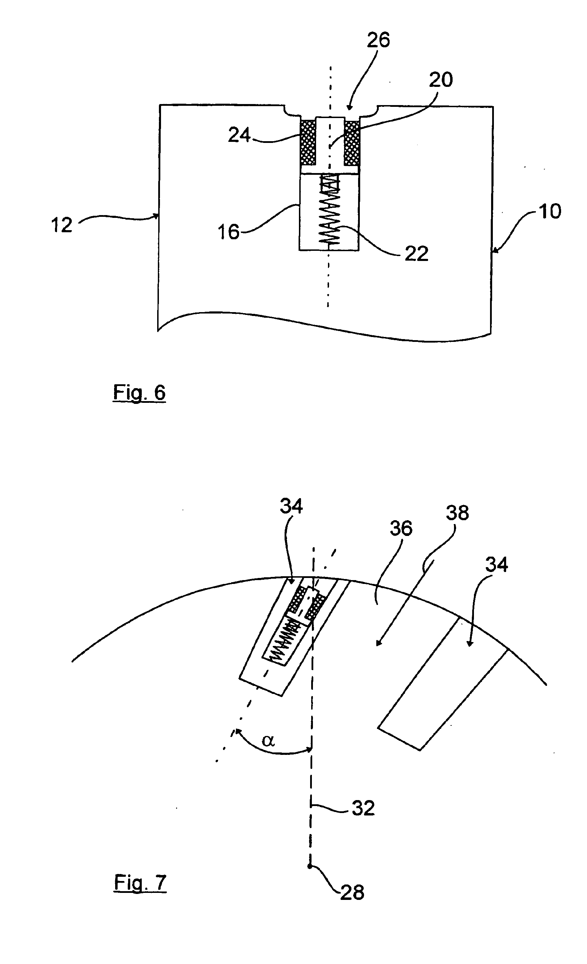

In der **Fig. 6** ist schließlich beispielhaft und schematisch eine alternative oder zusätzliche Positionierungsmöglichkeit eines erfindungsgemäßen Belastungsindikators am stirnseitigen Außenumfangsrandbereich 26 der Bremsscheibe 10 dargestellt. Konkret ist hier der Stift 20 ohne eine Führungshülse direkt in ein stirnseitig am Außenumfangsbereich 26 angeordnetes Sackloch als Ausnehmung 16 eingesetzt und mittels des z. B. durch einen Kleber ausgebildeten Verbindungsmittels 24 unmittelbar und direkt in der Ausnehmung 16 festgelegt. Die z. B. Druckfeder 22 als Kraftspeicher stützt sich dann einerseits am Boden der Ausnehmung 16 und andererseits am hier einen Bund 26 aufweisenden Stift 20 ab, wobei die Druckfeder 22 hier konkret einen bundseitigen Zapfen 28 umfasst. Der Bund 26 liegt gegebenenfalls mit einem geringen Spaltmaß am Innenwandbereich der Ausnehmung 16 an und gewährleistet bei einem Versagen des Verbindungsmittels 24 eine geführte, definierte Verlagerung des Stiftes 20 mittels der Druckfeder 22. Selbstverständlich kann aber auch in Verbindung mit dieser in der **Fig. 6** gezeigten Ausgestaltung ein Belastungsindikator mit einer Führungshülse und/oder ausnehmungsbodenseitigen Öffnungen für Pfeifgeräusche oder Vibrationen, wie zuvor beschrieben, verwendet bzw. vorgesehen werden.

Die **Fig. 7** zeigt eine Seitenansicht der Ausgestaltung gemäß **Fig. 6****,** aus der gut ersichtlich ist, dass der Stift 20 bzw. die stegseitige Ausnehmung 16, jeweils bezogen auf deren Längsmittelachse 30, um einen Winkel α von bevorzugt zwischen 10° bis 50° gegen die durch die Rotationsachse 28 und den Schnittpunkt der Längsmittelachse 30 mit dem Außenumfangsrand gelegte Gerade 32 geneigt ist. Sehr gut ersichtlich ist hier weiter die Anordnung des Belastungsindikators in einem Stegbereich 34 zwischen Kühlkanälen 36, durch die Kühlluft 38 strömen kann.

Die Erfindung ist nicht auf das dargestellte Ausführungsbeispiel beschränkt, sondern umfasst vielmehr alle sich aus den Patentansprüchen für den Fachmann ergebenden Ableitungen und Ausgestaltungen. So können als Verbindungsmittel 24 auch geeignete, hochtemperaturbeständige Lote oder andere Verbindungsmittel 24 eingesetzt sein, deren Festigkeit zur Fixierung des Stiftes 20 sich temperaturabhängig angenähert an den Gewichtsverlust der Keramik-Bremsscheibe 10 so verhält, dass sie bei Erreichen einer kritischen Restfestigkeit des Scheibenkörpers 12 versagt und der Stift 20 sich lösen kann.

## Patentansprüche

1. Bremsscheibe mit einer Vorrichtung zur Kontrolle des Verschleißzustandes der Bremsscheibe, die wenigstens einen Belastungsindikator aufweist, der mittels einer Verbindungsmittels mit der Bremsscheibe verbunden ist, **dadurch gekennzeichnet, dass** das Verbindungselement (24) bei Erreichen eines vorgegebenen Verschleißzustandes den Belastungsindikator (20) oder eine Verlagerung des Belastungsindikators (20) um einen vorgegebenen Verlagerungsweg freigibt.

2. Bremsscheibe nach Anspruch 1, **dadurch gekennzeichnet, dass** das Verbindungsmittel (24) aus einem Material hergestellt ist, das hinsichtlich seiner Verschleißeigenschaften, insbesondere hinsichtlich seiner thermischen Verschleißeigenschaften, im Wesentlichen identisch mit den Verschleißeigenschaften, insbesondere mit den thermischen Verschleißeigenschaften, der Bremsscheibe (10) ist.

3. Bremsscheibe nach Anspruch 2, **dadurch gekennzeichnet, dass** das Verbindungsmittel (24) durch einen in vorgegebenen Grenzen hochtemperaturbeständigen Kleber oder ein in vorgegebenen Grenzen hochtemperaturbeständiges Lot gebildet ist, dessen Festigkeit mit fortgesetzter Dauerbelastung, insbesondere thermischer Belastung, und/oder bei Extrembelastung, insbesondere durch thermische Alterung, abnimmt.

4. Bremsscheibe nach einem der Ansprüche 1 bis 3, **dadurch gekennzeichnet, dass** der Belastungsindikator (20) durch einen Kraftspeicher (22) in Richtung Ausschub oder Einschub vorgespannt, insbesondere mittels eines Federelementes federnd vorgespannt ist, wobei die Vorspannkraft so vorgegeben ist, dass der Belastungsindikator (20) erst bei Erreichen des vorgegebenen Verschleißzustandes des Verbindungsmittels (24) zwischen Bremsscheibe (10) und Belastungsindikator (20) verlagerbar ist.

5. Bremsscheibe nach einem der Ansprüche 1 bis 4, **dadurch gekennzeichnet, dass** der Belastungsindikator durch einen in einer Aufnahme (18) des Scheibenkörpers (12) der Bremsscheibe (10) aufgenommenen Stift (20) als Verschleißpin gebildet ist.

6. Bremsscheibe nach Anspruch 5, **dadurch gekennzeichnet, dass** die Aufnahme durch eine in eine Ausnehmung des Scheibenkörpers (12) fest eingesetzte Führungshülse (18) gebildet ist.

7. Bremsscheibe nach Anspruch 6, **dadurch gekennzeichnet, dass** der Belastungsindikator durch einen in der Aufnahme (18) federnd nach außen oder nach innen vorgespannten, durch das Verbindungsmittel (24) fixierten Stift (20) gebildet ist.

8. Bremsscheibe nach Anspruch 7, **dadurch gekennzeichnet, dass** der Stift (20) mittels einer in die Aufnahme (18) eingesetzten Druckfeder (22) nach außen oder mittels einer in die Aufnahme (18) eingesetzten Zugfeder nach innen vorgespannt ist, wobei sich die Druckfeder (22) am Boden (18a) der Aufnahme, insbesondere am Boden einer einseitig geschlossenen Führungshülse (18) als Aufnahme, abstützt und/oder am Boden (18a) befestigt ist.

9. Bremsscheibe nach einem der Ansprüche 1 bis 8, **dadurch gekennzeichnet, dass** bei freigegebenem, insbesondere ausgeschobenem oder eingezogenem Belastungsindikator (20) wenigstens eine Öffnung freigegeben ist, die im Fahrbetrieb hörbare Pfeifgeräusche oder Vibrationen oder Schwingungen zur insbesondere akustischen Verschleißanzeige erzeugt.

10. Bremsscheibe nach Anspruch 8 und 9, **dadurch gekennzeichnet, dass** in dem Boden (18a) der Aufnahme, insbesondere der Führungshülse (18) eine oder mehrere Öffnungen (18b) derart vorgesehen sind, dass bei verlagertem oder herausgefallenem Stift (20) bei drehender Bremsscheibe (10) hörbare Pfeifgeräusche oder Schwingungen oder Vibrationen entstehen.

11. Bremsscheibe nach einem der vorhergehenden Ansprüche, **dadurch gekennzeichnet, dass** der Belastungsindikator (20), insbesondere der Stift (20) und/oder die Aufnahme bzw. Führungshülse (18) um ein eine abrasive Verschleißgrenze des Scheibenkörpers (12) definierendes Maß (X) von den Bremsflächen (12a, 12b) des Scheibenkörpers (12) zurückgesetzt sind.

12. Bremsscheibe nach einem der vorhergehenden Ansprüche, **dadurch gekennzeichnet, dass** der wenigstens eine Belastungsindikator (20) am stirnseitigen Außenumfangsrandbereich (26) angeordnet ist, insbesondere in einem Stegbereich (34) der Bremsscheibe

13. Bremsscheibe nach einem der vorhergehenden Ansprüche, **dadurch gekennzeichnet, dass** sich das sichtbare Ende wenigstens eines Teils des Belastungsindikators, insbesondere des Stiftes (20) und/oder der Aufnahme bzw. Führungshülse (18) farblich von dem Scheibenkörper (12) unterscheidet, insbesondere eingefärbt ist.

14. Bremsscheibe nach einem oder mehreren der vorhergehenden Ansprüche, **dadurch gekennzeichnet, dass** an der Bremsscheibe (10) mehrere, vorzugsweise gleichmäßig über deren Umfang verteilte Belastungsindikatoren (18, 20) vorgesehen sind.

15. Vorrichtung zur Verschleißanzeige oder -kontrolle an Bremsscheiben, die einen Belastungsindikator aufweist, der in eine Ausnehmung eines Scheibenkörpers einer Bremsscheibe einsetzbar ist und an der Bremsscheibe mittels wenigstens eines Verbindungsmittels festgelegt ist, **dadurch gekennzeichnet, dass** der Belastungsindikator eine mit dem Scheibenkörper (12) der Bremsscheibe (10) fest und verliersicher verbindbare Führungshülse (18) aufweist, in der ein nach außen oder nach innen vorgespanntes Element aufgenommen ist, das in der Führungshülse (18) mittels eines Verbindungsmittels (24) fixiert ist, das so ausgelegt ist, dass es diese Fixierung bei Erreichen eines vorgegebenen Verschleißzustandes freigibt.

16. Bremsscheibe mit einer Vorrichtung nach Anspruch 15, die eine Ausnehmung (16) aufweist, in die die Führungshülse (18) im montierten Zustand eingesetzt ist.

## Claims

1. Brake disc having a device for inspecting the wear state of the brake disc, which device has at least one loading indicator which is connected to the brake disc by a connecting means, **characterized in that**, when a predefined wear state is reached, the connecting element (24) releases the loading indicator (20) or enables a movement of the loading indicator (20) by a predefined movement travel.

2. Brake disc according to Claim 1, **characterized in that** the connecting means (24) is produced from a material which is substantially identical with regard to its wear properties, in particular with regard to its thermal wear properties, to the wear properties, in particular the thermal wear properties, of the brake disc (10).

3. Brake disc according to Claim 2; **characterized in that** the connecting means (24) is formed by an adhesive which is high-temperature resistant within predefined limits or a solder which is high-temperature resistant within predefined limits, the strength of which decreases with progressive permanent loading, in particular thermal loading, and/or under extreme loading, in particular as a result of thermal ageing.

4. Brake disc according to one of Claims 1 to 3, **characterized in that** the loading indicator (20) is preloaded by a force store (22) in the pushing-out or pushing-in direction, in particular is resiliently preloaded by means of a spring element, with the preload force being predefined such that the loading indicator (20) can be moved only when the predefined wear state of the connecting element (24) between the brake disc (10) and loading indicator (20) is reached.

5. Brake disc according to one of Claims 1 to 4, **characterized in that** the loading indicator is formed by a pin (20), as a wear pin, which is held in a receptacle (18) of the disc body (12) of the brake disc (10).

6. Brake disc according to Claim 5, **characterized in that** the receptacle is formed by a guide sleeve (18) fixedly inserted into a recess of the disc body (12).

7. Brake disc according to Claim 6, **characterized in that** the loading indicator is formed by a pin (20) which, in the receptacle (18), is resiliently preloaded in the outward or inward direction and is fixed by the connecting means (24).

8. Brake disc according to Claim 7, **characterized in that** the pin (20) is preloaded in the outward direction by means of a compression spring (22) inserted into the receptacle (18) or is preloaded in the inward direction by means of a tension spring inserted into the receptacle (18), with the compression spring (22) being supported on the base (18a) of the receptacle, in particular on the base of a guide sleeve (18) which is closed at one side as a receptacle, and/or being fastened to the base (18a).

9. Brake disc according to one of Claims 1 to 8, **characterized in that**, when the loading indicator (20) is released, in particular pushed out or pulled in, at least one opening is opened up which, during driving operation, generates audible whistling noises or vibrations or oscillations for an in particular acoustic wear indication.

10. Brake disc according to Claim 8 or 9, **characterized in that**, in the base (18a) of the receptacle, in particular of the guide sleeve (18), one or more openings (18b) are provided such that, if the pin (20) has moved or has fallen out, audible whistling noises or oscillations or vibrations are generated as the brake disc (10) rotates.

11. Brake disc according to one of the preceding claims, **characterized in that** the loading indicator (20), in particular the pin (20) and/or the receptacle or guide sleeve (18), are recessed with respect to the brake surfaces (12a, 12b) of the disc body (12) by a dimension (X) which defines an abrasive wear limit of the disc body (12).

12. Brake disc according to one of the preceding claims, **characterized in that** the at least one loading indicator (20) is arranged on the end-side outer circumferential edge region (26), in particular in a web region (34) of the brake disc.

13. Brake disc according to one of the preceding claims, **characterized in that** the visible end of at least one part of the loading indicator, in particular of the pin (20) and/or of the receptacle or guide sleeve (18), is of a different colour to the disc body (12), in particular is pigmented.

14. Brake disc according to one or more of the preceding claims, **characterized in that** a plurality of loading indicators (18, 20) are provided on the brake disc (10), preferably distributed uniformly over the circumference thereof.

15. Device for wear indication or inspection on brake discs, which device has a loading indicator which can be inserted into a recess of a disc body of a brake disc and is fixed to the brake disc by means of at least one connecting means, **characterized in that** the loading indicator has a guide sleeve (18) which can be fixedly and captively connected to the disc body (12) of the brake disc (10), in which guide sleeve (18) is held an element which is preloaded in the outward or inward direction and which is fixed in the guide sleeve (18) by a connecting means (24) which is designed so as to eliminate said fixing action when a predefined wear state is reached.

16. Brake disc having a device according to Claim 15, which brake disc has a recess (16) into which the guide sleeve (18) is inserted in the assembled state.

## Revendications

1. Disque de frein, comprenant un dispositif pour contrôler l'état d'usure du disque de frein, qui présente au moins un indicateur de contrainte, qui est connecté au disque de frein par l'intermédiaire d'un moyen de connexion, **caractérisé en ce que** l'élément de connexion (24), lorsqu'un état d'usure prédéfini est atteint, libère l'indicateur de contrainte (20) ou un décalage de l'indicateur de contrainte (20) d'une course de décalage prédéfinie.

2. Disque de frein selon la revendication 1, **caractérisé en ce que** le moyen de connexion (24) est fabriqué en un matériau qui, en termes de ses propriétés d'usure, notamment en termes de ses propriétés d'usure thermiques, est essentiellement identique aux propriétés d'usure, notamment aux propriétés d'usure thermiques du disque de frein (10).

3. Disque de frein selon la revendication 2, **caractérisé en ce que** le moyen de connexion (24) est formé par un adhésif résistant aux hautes températures dans des limites prédéfinies, ou une brasure résistant aux hautes températures dans des limites prédéfinies, dont la tenue diminue au fur et à mesure de l'application prolongée poursuivie d'une contrainte, notamment de la contrainte thermique, et/ou dans le cas d'une application de contrainte extrême, notamment par vieillissement thermique.

4. Disque de frein selon l'une quelconque des revendications 1 à 3, **caractérisé en ce que** l'indicateur de contrainte (20) est précontraint par un accumulateur de force (22) dans la direction de sortie ou la direction d'entrée, notamment est précontraint par ressort au moyen d'un élément de ressort, la force de précontrainte étant prédéfinie de telle sorte que l'indicateur de contrainte (20) ne puisse être décalé qu'une fois atteint l'état d'usure prédéfini du moyen de connexion (24) entre le disque de frein (10) et l'indicateur de contrainte (20).

5. Disque de frein selon l'une quelconque des revendications 1 à 4, **caractérisé en ce que** l'indicateur de contrainte est formé par une broche (20) reçue dans un logement (18) du corps de disque (12) du disque de frein (10) en tant que goupille d'usure.

6. Disque de frein selon la revendication 5, **caractérisé en ce que** le logement est formé par une douille de guidage (18) insérée fixement dans un évidement du corps de disque (12).

7. Disque de frein selon la revendication 6, **caractérisé en ce que** l'indicateur de contrainte est formé par une broche (20) fixée par le moyen de connexion (24), précontrainte par ressort dans le logement (18) vers l'extérieur ou vers l'intérieur.

8. Disque de frein selon la revendication 7, **caractérisé en ce que** la broche (20) est précontrainte vers l'extérieur au moyen d'un ressort de pression (22) inséré dans le logement (18), ou vers l'intérieur au moyen d'un ressort de traction inséré dans le logement (18), le ressort de pression (22) s'appuyant et/ou étant fixé sur le fond (18a) du logement, notamment sur le fond d'une douille de guidage (18a) fermée d'un côté, servant de logement.

9. Disque de frein selon l'une quelconque des revendications 1 à 8, **caractérisé en ce que** dans le cas d'un indicateur de contrainte (20) libéré, notamment sorti ou rentré, au moins une ouverture est libérée, laquelle produit pendant le mode de conduite des bruits de sifflement audibles ou des vibrations ou des oscillations pour l'indicateur d'usure notamment acoustique.

10. Disque de frein selon les revendications 8 et 9, **caractérisé en ce qu'**une ou plusieurs ouvertures (18b) sont prévues dans le fond (18a) du logement, notamment de la douille de guidage (18), de telle sorte que lorsque la broche (20) a été décalée ou est tombée lorsque le disque de frein (10) tourne, des bruits de sifflements audibles ou des oscillations ou des vibrations se produisent.

11. Disque de frein selon l'une quelconque des revendications précédentes, **caractérisé en ce que** l'indicateur de contrainte (20), notamment la broche (20), et/ou le logement ou la douille de guidage (18), sont en retrait d'une mesure (X) définissant une limite d'usure abrasive du corps de disque (12) par rapport aux surfaces de freinage (12a, 12b) du corps de disque (12).

12. Disque de frein selon l'une quelconque des revendications précédentes, **caractérisé en ce que** l'au moins un indicateur de contrainte (20) est disposé sur la région de bord périphérique extérieur du côté frontal, notamment dans une région de nervure (34) du disque de frein.

13. Disque de frein selon l'une quelconque des revendications précédentes, **caractérisé en ce que** l'extrémité visible d'au moins une partie de l'indicateur de contrainte, notamment de la broche (20) et/ou du logement ou de la douille de guidage (18) se distingue du corps de disque (12) de par sa couleur, notamment est colorée.

14. Disque de frein selon l'une quelconque ou plusieurs des revendications précédentes, **caractérisé en ce que** plusieurs indicateurs de contrainte (18, 20) répartis de préférence uniformément sur la circonférence sont prévus sur le disque de frein (10).

15. Dispositif pour afficher ou contrôler l'usure de disques de frein, qui présente un indicateur de contrainte, qui peut être inséré dans un évidement d'un corps de disque d'un disque de frein et qui est fixé sur le disque de frein au moyen d'au moins un moyen de connexion, **caractérisé en ce que** l'indicateur de contrainte présente une douille de guidage (18) pouvant être connectée fixement et de manière imperdable au corps de disque (12) du disque de frein (10), dans laquelle est reçue un élément précontraint vers l'extérieur ou vers l'intérieur, qui est fixé dans la douille de guidage (18) par l'intermédiaire d'un moyen de connexion (24) qui est conçu de telle sorte qu'il libère cette fixation une fois atteint un état d'usure prédéfini.

16. Disque de frein comprenant un dispositif selon la revendication 15, qui présente un évidement (16) dans lequel est insérée la douille de guidage (18) dans l'état monté.
